# EUROPEAN PATENT APPLICATION

(11) **EP 3 422 050 A1**
(43) Date of publication of application: **02.01.2019**
(21) Application number: 18180672.0
(22) Date of filing: 29.06.2018
(51) Int. Cl.: G01S 17/93, G01S 7/497

(54) **LIDAR SENSOR ALIGNMENT SYSTEM**

(30) Priority: 30.06.2017 US 201715638577
(71) Applicant: Aptiv Technologies Limited, St. Michael (BB)
(72) Inventor: LEE, Jong Ho, Pittsburgh, PA 15211 (US); KIM, Junsung, Pittsburgh, PA 15206 (US); XU, Wenda, Pittsburgh, PA 15213 (US)
(74) Representative: Conroy, John

(57) **Abstract**

A Light Detection and Ranging (LiDAR) sensor alignment system includes first and second LiDAR sensors, and a controller. The first and second LiDAR sensors are each configured to monitor respective first and second regions and output respective first and second LiDAR signals associated with the regions. The controller is configured to receive the signals, recognize a target detected by both the first and second LiDAR sensors, utilize a first coordinate map associated with the first region to determine a first mapped location of the target, utilize a second coordinate map associated with the second region to determine a second mapped location of the target, and associate the first and second mapped locations to determine if the first and second LiDAR sensors are aligned.

## Description

### BACKGROUND OF THE INVENTION

The present disclosure relates to a Light Detection and Ranging (LiDAR) sensor alignment system, and more particularly, to a LiDAR sensor alignment system of a tracking system for automated vehicles.

The operation of modern vehicles is becoming increasingly autonomous, causing a decrease in driver intervention. The various control features are becoming increasingly complex while vehicle accuracy, efficiency, and reliability must be at least maintained. The complex nature of such automated systems may require a large number of sensors. Such sensors may become misaligned. If not corrected, such misalignment may degrade optimal vehicle performance.

### SUMMARY OF THE INVENTION

In one, non-limiting, exemplary embodiment of the present disclosure, a Light Detection and Ranging (LiDAR) sensor alignment system includes first and second LiDAR sensors, and a controller. The first and second LiDAR sensors are each configured to monitor respective first and second regions and output respective first and second LiDAR signals associated with the regions. The controller is configured to receive the signals, recognize a target detected by both the first and second LiDAR sensors, utilize a first coordinate map associated with the first region to determine a first mapped location of the target, utilize a second coordinate map associated with the second region to determine a second mapped location of the target, and associate the first and second mapped locations to determine if the first and second LiDAR sensors are aligned.

In another, non-limiting, embodiment, an automated vehicle includes a first LiDAR sensor, a second LiDAR sensor, and a controller. The first LiDAR sensor is configured to monitor a first region and output a first LiDAR signal associated with the first region. The second LiDAR sensor is configured to monitor a second region and output a second LiDAR signal associated with the second region. A first segment of the first region completely overlaps a second segment of the second region when both the first and second LiDAR sensors are aligned. The controller includes a processor and an electronic storage medium. The processor is configured to receive and process the first and second LiDAR signals, recognize a target detected by both the first and second LiDAR sensors, utilize a first coordinate map associated with the first region and stored in the electronic storage medium to determine a first mapped location of the target, determine a second hypothetical location of the target associated with a second coordinate map orientated in a preprogrammed alignment configuration with the first coordinate map, utilize the second coordinate map associated with the second region and stored in the electronic storage medium to determine a second mapped location of the target, and compare the second hypothetical location to the second mapped location to determine if the first and second LiDAR sensors are aligned.

In another, non-limiting, embodiment, a computer software product is executed by a controller of an automated vehicle that includes first and second LiDAR sensors configured to output respective first and second LiDAR signals associated with respective first and second regions. The computer software product includes a preprogrammed database, a recognition module, a location assignment module, and a comparison module. The preprogrammed database includes preprogrammed first and second coordinate maps associated with the respective first and second regions, and an alignment model indicative of the first and second coordinate maps being aligned. The recognition module is configured to receive the first and second LiDAR signals and recognize a target detected by both the first and second LiDAR sensors. The location assignment module is configured to assign a first mapped location of the target relative to the first coordinate map, assign a modeled second location of the detected target relative to the first mapped location and the second coordinate map when not associated with the second region and when utilizing the alignment model, and assign a true second mapped location of the detected target when utilizing the second coordinate map relative to the second region and regardless of whether the second LiDAR sensor is aligned or misaligned. The comparison module is configured to compare the modeled second mapped location to the true second mapped location to determine if the first and second LiDAR sensors are aligned.

These and other advantages and features will become more apparent from the following description taken in conjunction with the drawings.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a top view of a host vehicle depicted with a LiDAR sensor alignment system having a LiDAR sensor that is aligned;
FIG. 2 is a top view of the host vehicle with the LiDAR sensor alignment system having the LiDAR sensor that is misaligned; and
FIG. 3 is a schematic of the host vehicle with the LiDAR sensor alignment system.

### DETAILED DESCRIPTION

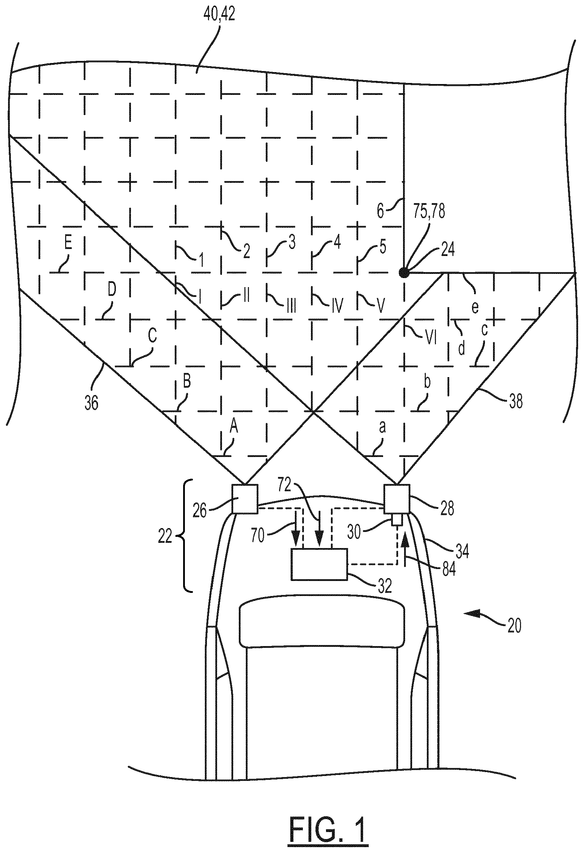

FIG. 1 illustrates a non-limiting example of a semi-autonomous or autonomous vehicle 20 (hereafter termed automated or host vehicle) that may include various systems and components that may contribute toward partial or full automated operation of the host vehicle 20. The various components and/or systems may control the speed, direction (e.g., steering), brakes and other aspects of the vehicle operation necessary for the host vehicle 20 to, for example, generally travel along a roadway. Such vehicle travel may be without the interaction of an occupant (not shown) within the host vehicle 20.

A target 24 that may be, for example, a corner of another vehicle, may be generally located forward of the host vehicle 20. The various components and/or systems of the host vehicle 20, which contribute toward automated operational aspects of the host vehicle, may generally detect, sense, and/or image the target 24 in order to affect a desired response by the host vehicle 20.

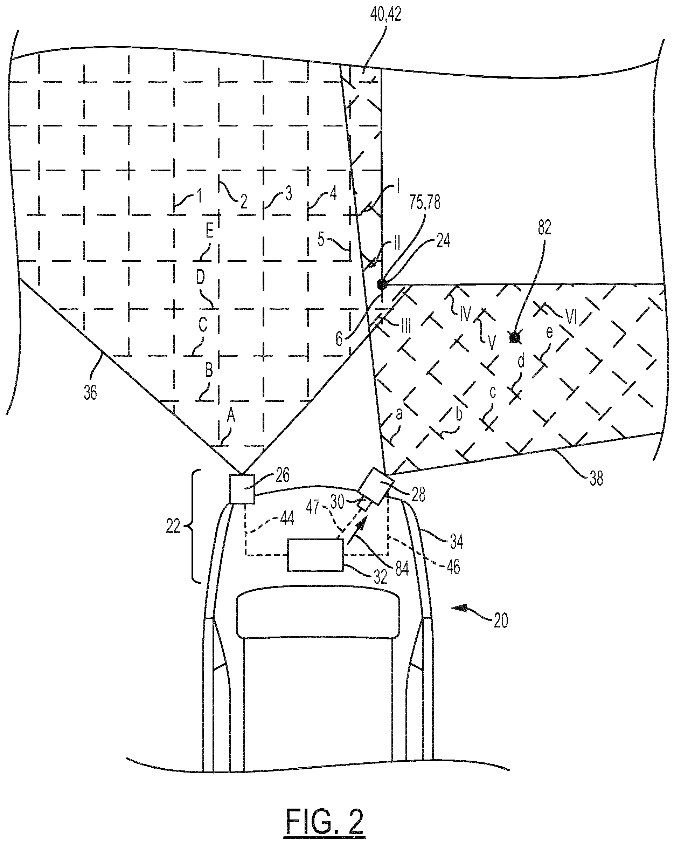

The host vehicle 20 includes a Light Detection and Ranging (LiDAR) sensor alignment system 22. The LiDAR sensor alignment system 22 may include a first LiDAR sensor 26, a second LiDAR sensor 28, at least one mount device 30, and a controller 32. In FIG. 1, the first LiDAR sensor 26 may be an aligned LiDAR sensor or a sensor located in a position where misalignment is unlikely. The second LiDAR sensor 28 may generally move with between aligned and misaligned positions. When the second LiDAR sensor 28 is misaligned, the two LiDAR sensors 26, 28 may not operate, together, to their optimal potential. In FIG. 1, the LiDAR sensors 26, 28 are illustrated in desired, aligned, positions. In FIG. 2, the second LiDAR sensor 28 is illustrated in a misaligned position with respect to the first LiDAR sensor 26.

The mount device 30 may be attached to, and may extend between, the second LiDAR sensor 28 and a body 34 of the host vehicle 20. The mount device 30 may be adapted to adjust the positioning of the second LiDAR sensor 28. In one embodiment, this adjustment may be conducted manually, and in another embodiment, the mount device 30 may include an electric alignment drive, or motor, constructed to automatically align the second LiDAR sensor 28.

Each LiDAR sensor 26, 28 includes respective field of views or regions 36, 38 generally established to monitor for objects or targets 24 within one or both regions 36, 38. For example, each LiDAR sensor 26, 28 may include a field of view 36, 38 generally associated with respective viewing angles of about forty-five degrees (see arrows 40, 42). In the present example, the LiDAR sensors 26, 28 may be separated from one-another and mounted on opposite forward corners of the host vehicle 20. With this configuration, the aligned LiDAR sensors 26, 28, working together, can view a greater area than just one sensor. It is further illustrated that the regions 36, 38 may overlap, beginning at a distance forward of the vehicle 20. Therefore, each region 36, 38, may include respective overlap segments 40, 42 that completely overlap one-another. The general area of this overlap changes as one of the LiDAR sensors 26, 28 moves from the aligned position to the misaligned position.

The LiDAR sensor alignment system 22 may further include communication pathways 44, 46, 47 that may be wired or wireless. The first pathway 44 may extend between the controller 32 and the first LiDAR sensor 26. The second pathway 46, may extend between the controller 32 and the second LiDAR sensor 28, and the third pathway 47 may extend between the controller 32 and the mount device 30.

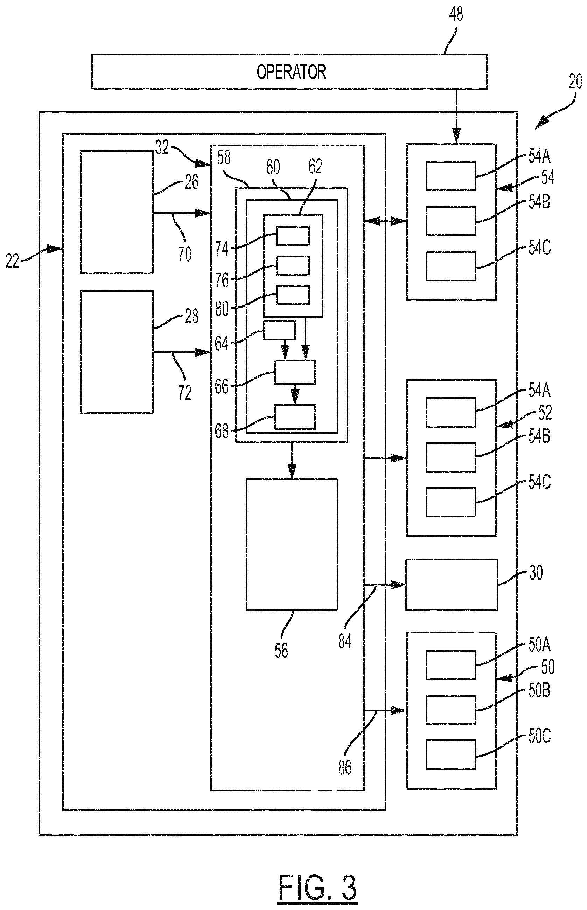

Referring to FIGS. 1 and 3, and as previously stated, the host vehicle 20 may be semi-autonomous or fully autonomous. Various components of the LiDAR sensor alignment system 22 may generally serve at least two functions. For example, the first and second LiDAR sensors 26, 28 may serve a primary function of detecting the presence of objects in the path of the moving host vehicle 20. Such detection may be processed by the controller 32, which may then initiate various commands to automatically produce an appropriate response by the host vehicle 20.

In the example of a semi-autonomous host vehicle 20, the host vehicle may be typically driven by an operator 48. In this case, an automation system (not shown) may provide assistance to the operator 48. This assistance may be the mere activation of a warning device 50 (see FIG. 3), or may include activating a control override unit 52 that temporarily takes over the control of manual controls 54 that are typically used by the operator 48. Such manual controls 54 may include a directional unit 54A (e.g., steering unit), an acceleration unit 54B, and a braking unit 54C of the host vehicle 20. The warning device 50 may include, or may be, an audible device 50A, a visual device 50B, and/or a haptic device 50C. In the example of a fully autonomous, host, vehicle 20, the automation system may simply command the controls 54 continuously, without significant operator intervention.

Referring to FIG. 3, LiDAR sensor alignment system 22 may further include the warning device 50. The controller 32 may include a processor 56 and an electronic storage medium 58. The processor 56 may be a microprocessor or other control circuitry such as analog and/or digital control circuitry including an application specific integrated circuit (ASIC) for processing data as is known by one with skill in the art. The storage medium 58 of the controller 32 may be non-volatile memory, such as electrically erasable programmable read-only memory (EEPROM) for storing one or more routines, thresholds, and captured data, hereafter referred to as an application 60 (e.g., a computer software product). The application 60 may be executed by the processor 56 of the controller 32 to at least recognize when one of the LiDAR sensors 26, 28 are out of alignment.

The LiDAR sensors 26, 28 are generally known to one having skill in the art, and when in an aligned position, are configured to at least assist in the detection and monitoring of the object 24. More specifically, each LiDAR sensor 26, 28 may include a large array of individual light or laser beams that are pulsed at a predetermined frequency. Sensor(s) included as part of the LiDAR sensors 26, 28 are configured to detect the reflected, or returned, light. The time between the initial pulsing of the light and the sensed light return is used to calculate the distance of the reflecting object surface. The rapid pulsing of the LiDAR sensors 26, 28 and the information obtained can be processed to determine movement of the detected object 24. Similarly, and in any given moment in time, the location of the object 24 may be determined within a three-dimensional space.

The application 60 may include a database 62, a recognition module 64, a location assignment module 66, and a comparison module 68. The recognition module 64 is configured to receive first and second LiDAR signals (see arrows 70, 72) from the respective LiDAR sensors 26, 28 over the respective pathways 44, 46. Once received, the recognition module 64 processes the signals 70, 72 to recognize the target. For purposes of sensor alignment, the module 68 may recognize a target 24 that is detected by both sensors 26, 28 in a given, singular, moment in time.

The location assignment module 66 is configured to utilize a first coordinate map 74 stored in the database 62 to determine and assign a first mapped location 75 of the target 24. For example, in FIGS. 1 and 2, the first mapped location 75 associated with the first region 36 monitored by the first LiDAR sensor 26 may, for illustrative purposes herein, be assign the coordinates of (E, 6). The location assignment module 66 is further configured to utilize a second coordinate map 76 stored in the database 62 to determine and assign a second mapped location 78 (i.e., a true second mapped location) associated with the second region 38 that is monitored by the second LiDAR sensor 28. In FIG. 1, the second LiDAR sensor 28 is aligned, and the second mapped location 78 may be assigned the coordinates of about (e, VI). In FIG. 2, the second LiDAR sensor 28 is misaligned, and the second mapped location 78 may be identified, or assigned, the coordinates of about (d, III). Although the illustrative example is depicted as a two-dimensional array, it is contemplated and understood that the same principles may be applied to three-dimensions, or volumetric space.

In the present example, the first LiDAR sensor 26 may be assumed to be aligned and is thus used as a reference to determine alignment of the second LiDAR sensor 28. To assist in this execution, the location assignment module 66 may further utilize an alignment model 80 preprogramed into the database 62 of the electronic storage medium 58. The alignment model 80 is generally a reference that orientates the first and second coordinate maps 74, 76 with respect to one another, assuming that the first and second LiDAR sensors 26, 28 are aligned. Utilizing the first mapped location 75 and the model 80, the location assignment module 66 may determine a modeled second location 82 (see FIG. 2). That is, the modeled second location 82 is what the true second mapped location 78 should be if the LiDAR sensors 26, 28 are aligned.

The comparison module 68 is configured to compare the true second mapped location 78 to the modeled second location 82. If the two locations 78, 82 generally match, the application 58 may determine that the LiDAR sensors 26, 28 are aligned. If the two locations 78, 82 do not match, the application 58 may utilize the coordinates to determine how far, and in which direction, the second LiDAR sensor 28 is out of alignment.

Referring to FIGS. 1 and 3, and in operation of the LiDAR sensor alignment system 22, the system may initiate execution of the application 58 automatically and periodically to verify alignment of the LiDAR sensors 26, 28. In another embodiment, the system 22 may be operated via a request by, for example, a vehicle technician. Regardless of how execution of application 58 is initiated, the LiDAR sensors 26, 28 detect the target 24 and send and send respective signals 70, 72 to the controller 32 for processing by the recognition module 64. The location assignment module 66, then utilizes the first coordinate map 74, the second coordinate map 76, and the model 80 to determine alignment of the second LiDAR sensor 28. The maps 74, 78 and the model 80 may be preprogrammed into the electronic storage medium 58.

If the second LiDAR sensor 28 is misaligned, the controller 32 may initiate an action by sending a command signal (see arrow 84) to the mount device 30 over pathway 47, and which may cause the mount device 30 to realign the LiDAR sensor 28 by a magnitude and direction that may be determined by comparison of the locations 78, 82. In another embodiment, a command signal (see arrow 86) may be sent to the warning device 50, as the action, to notify the operator 48 of the misalignment.

Accordingly, the LiDAR sensor alignment system 22 for automated operation of the host vehicle 20 advances the automated vehicle arts by enabling a system, application, or controller to perform self-diagnostics thereby improving overall vehicle accuracy, efficiency, and reliability.

The various functions described above may be implemented or supported by a computer program that is formed from computer readable program codes, and that is embodied in a computer readable medium. Computer readable program codes may include source codes, object codes, executable codes, and others. Computer readable mediums may be any type of media capable of being accessed by a computer, and may include Read Only Memory (ROM), Random Access Memory (RAM), a hard disk drive, a compact disc (CD), a digital video disc (DVD), or other forms.

Terms used herein such as component, application, module, system, and the like are intended to refer to a computer-related entity, either hardware, a combination of hardware and software, or software execution. By way of example, an application may be, but is not limited to, a process running on a processor, a processor, an object, an executable, a thread of execution, a program, and/or a computer. It is understood that an application running on a server and the server, may be a component. One or more applications may reside within a process and/or thread of execution and an application may be localized on one computer and/or distributed between two or more computers

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description

### Embodiments

Although the present invention is defined in the attached claims, it should be understood that the present invention can also (alternatively) be defined in accordance with the following embodiments:
1. A Light Detection and Ranging (LiDAR) sensor alignment system comprising:
   a first LiDAR sensor configured to monitor a first region and output a first LiDAR signal associated with the first region;
   a second LiDAR sensor configured to monitor a second region and output a second LiDAR signal associated with the second region; and
   a controller configured to receive the first and second LiDAR signals and recognize a target detected by both the first and second LiDAR sensors, utilize a first coordinate map associated with the first region to determine a first mapped location of the target, utilize second coordinate map associated with the second region to determine a second mapped location of the target, and associate the first and second mapped locations to determine if the first and second LiDAR sensors are aligned.
2. The LiDAR sensor alignment system set forth in embodiment 1, wherein the controller is configured to utilize the first mapped location and an alignment model to determine a modeled second location of the detected target that is generally not associated with the second region, and the second mapped location of the detected target is determined when utilizing the second coordinate map relative to the second region and regardless of whether the second LiDAR sensor is aligned or misaligned.
3. The LiDAR sensor alignment system set forth in embodiment 2, wherein the first and second coordinate maps and the alignment model are preprogrammed into the controller.
4. The LiDAR sensor alignment system set forth in embodiment 2, wherein the first and second coordinate maps are aligned to one another when the first and second LiDAR sensors are aligned, and being indicative of the alignment model.
5. The LiDAR sensor alignment system set forth in embodiment 2, wherein the controller is configured to compare the modeled second location to the second mapped location to determine if the second LiDAR sensor is aligned.
6. The LiDAR sensor alignment system set forth in embodiment 5, wherein the second LiDAR sensor is not aligned if the second modeled location is substantially not the same as the second mapped location.
7. The LiDAR sensor alignment system set forth in embodiment 1, wherein the controller includes a processor and an electronic storage medium, and the first coordinate map, the second coordinate map, and the alignment model are preprogrammed and stored in the electronic storage medium.
8. The LiDAR sensor alignment system set forth in embodiment 7, wherein the processor processes the first and second LiDAR signals.
9. The LiDAR sensor alignment system set forth in embodiment 1, wherein the first LiDAR sensor is an aligned LiDAR sensor utilized as a reference to verify whether the second LiDAR sensor is aligned or misaligned.
10. The LiDAR sensor alignment system set forth in embodiment 1, wherein the first and second coordinate maps and the alignment model are each three dimensional.
11. An automated vehicle comprising:
   a first LiDAR sensor configured to monitor a first region and output a first LiDAR signal associated with the first region;
   a second LiDAR sensor configured to monitor a second region and output a second LiDAR signal associated with the second region, wherein a first segment of the first region completely overlaps a second segment of the second region when both the first and second LiDAR sensors are aligned; and
   a controller including a processor and an electronic storage medium, wherein the processor is configured to receive and process the first and second LiDAR signals, recognize a target detected by both the first and second LiDAR sensors, utilize a first coordinate map associated with the first region and stored in the electronic storage medium to determine a first mapped location of the target, determine a second hypothetical location of the target associated with a second coordinate map orientated in a preprogrammed alignment configuration with the first coordinate map, utilize the second coordinate map associated with the second region and stored in the electronic storage medium to determine a second mapped location of the target, and compare the second hypothetical location to the second mapped location to determine if the first and second LiDAR sensors are aligned.
12. The automated vehicle set forth in embodiment 11, wherein the second LiDAR sensor is not aligned if the second hypothetical location is not the same as the second mapped location.
13. The automated vehicle set forth in embodiment 11, further comprising:
   a body, wherein the first and second LiDAR sensors are mounted to the body and spaced apart from one-another.
14. The automated vehicle set forth in embodiment 11, wherein if the first and second LiDAR sensors are not aligned to one another, the processor initiates an action.
15. The automated vehicle set forth in embodiment 14, further comprising:
   a warning device, wherein the action is initiation of the warning device.
16. The automated vehicle set forth in embodiment 14, further comprising:
   a mount device attached to the second LiDAR sensor and the body, wherein the mount device is constructed and arranged to move the LiDAR sensor with respect to the body thereby aligning the second LiDAR sensor.
17. The automated vehicle set forth in embodiment 16, wherein the mount device includes an electric alignment drive constructed and arranged to be controlled by the controller for aligning the second LiDAR sensor.
18. A computer software product executed by a controller of an automated vehicle including first and second LiDAR sensors configured to output respective first and second LiDAR signals associated with respective first and second regions, the computer software product comprising:
   a preprogrammed database including preprogrammed first and second coordinate maps associated with the respective first and second regions, and an alignment model indicative of the first and second coordinate maps being aligned;
   a recognition module configured to receive the first and second LiDAR signals and recognize a target detected by both the first and second LiDAR sensors;
   a location assignment module configured to assign a first mapped location of the target relative to the first coordinate map, a modeled second location of the detected target relative to the first mapped location and the second coordinate map when not associated with the second region and when utilizing the alignment model, and a true second mapped location of the detected target when utilizing the second coordinate map relative to the second region and regardless of whether the second LiDAR sensor is aligned or misaligned; and
   a comparison module configured to compare the modeled second mapped location to the true second mapped location to determine if the first and second LiDAR sensors are aligned.
19. The computer software product set forth in embodiment 18, wherein the modeled second location is approximately equal to the true second mapped location when the first and second LiDAR sensors are aligned.

## Claims

1. A Light Detection and Ranging (LiDAR) sensor alignment system comprising:
a first LiDAR sensor configured to monitor a first region and output a first LiDAR signal associated with the first region;
a second LiDAR sensor configured to monitor a second region and output a second LiDAR signal associated with the second region; and
a controller configured to receive the first and second LiDAR signals and recognize a target detected by both the first and second LiDAR sensors, utilize a first coordinate map associated with the first region to determine a first mapped location of the target, utilize second coordinate map associated with the second region to determine a second mapped location of the target, and associate the first and second mapped locations to determine if the first and second LiDAR sensors are aligned.

2. The LiDAR sensor alignment system set forth in claim 1, wherein the controller is configured to utilize the first mapped location and an alignment model to determine a modeled second location of the detected target that is generally not associated with the second region, and the second mapped location of the detected target is determined when utilizing the second coordinate map relative to the second region and regardless of whether the second LiDAR sensor is aligned or misaligned.

3. The LiDAR sensor alignment system set forth in claim 2, wherein the first and second coordinate maps and the alignment model are preprogrammed into the controller.

4. The LiDAR sensor alignment system set forth in claim 2, wherein the first and second coordinate maps are aligned to one another when the first and second LiDAR sensors are aligned, and being indicative of the alignment model.

5. The LiDAR sensor alignment system set forth in claim 2, wherein the controller is configured to compare the modeled second location to the second mapped location to determine if the second LiDAR sensor is aligned, for example, wherein the second LiDAR sensor is not aligned if the second modeled location is substantially not the same as the second mapped location.

6. The LiDAR sensor alignment system set forth in claim 1, wherein the controller includes a processor and an electronic storage medium, and the first coordinate map, the second coordinate map, and the alignment model are preprogrammed and stored in the electronic storage medium, and optionally wherein the processor processes the first and second LiDAR signals.

7. The LiDAR sensor alignment system set forth in claim 1, wherein the first LiDAR sensor is an aligned LiDAR sensor utilized as a reference to verify whether the second LiDAR sensor is aligned or misaligned.

8. The LiDAR sensor alignment system set forth in claim 1, wherein the first and second coordinate maps and the alignment model are each three dimensional.

9. An automated vehicle comprising the LiDAR sensor alignment system set forth in claim 1, wherein: a first segment of the first region completely overlaps a second segment of the second region when both the first and second LiDAR sensors are aligned;
the controller includes a processor and an electronic storage medium, wherein the processor is configured to receive and process the first and second LiDAR signals, recognize the target detected by both the first and second LiDAR sensors, utilize the first coordinate map associated with the first region and stored in the electronic storage medium to determine the first mapped location of the target, determine a second hypothetical location of the target associated with a second coordinate map orientated in a preprogrammed alignment configuration with the first coordinate map, utilize the second coordinate map associated with the second region and stored in the electronic storage medium to determine the second mapped location of the target, and compare the second hypothetical location to the second mapped location to determine if the first and second LiDAR sensors are aligned.

10. The automated vehicle set forth in claim 9, wherein the second LiDAR sensor is not aligned if the second hypothetical location is not the same as the second mapped location.

11. The automated vehicle set forth in claim 9, further comprising:
a body, wherein the first and second LiDAR sensors are mounted to the body and spaced apart from one-another.

12. The automated vehicle set forth in claim 9, wherein if the first and second LiDAR sensors are not aligned to one another, the processor initiates an action, for example, wherein the automated vehicle further comprises a warning device, wherein the action is initiation of the warning device.

13. The automated vehicle set forth in claim 12, further comprising:
a mount device attached to the second LiDAR sensor and the body, wherein the mount device is constructed and arranged to move the LiDAR sensor with respect to the body thereby aligning the second LiDAR sensor, and optionally wherein the mount device includes an electric alignment drive constructed and arranged to be controlled by the controller for aligning the second LiDAR sensor.

14. A computer software product executed by a controller of an automated vehicle including first and second LiDAR sensors configured to output respective first and second LiDAR signals associated with respective first and second regions, the computer software product comprising:
a preprogrammed database including preprogrammed first and second coordinate maps associated with the respective first and second regions, and an alignment model indicative of the first and second coordinate maps being aligned;
a recognition module configured to receive the first and second LiDAR signals and recognize a target detected by both the first and second LiDAR sensors;
a location assignment module configured to assign a first mapped location of the target relative to the first coordinate map, a modeled second location of the detected target relative to the first mapped location and the second coordinate map when not associated with the second region and when utilizing the alignment model, and a true second mapped location of the detected target when utilizing the second coordinate map relative to the second region and regardless of whether the second LiDAR sensor is aligned or misaligned; and
a comparison module configured to compare the modeled second mapped location to the true second mapped location to determine if the first and second LiDAR sensors are aligned.

15. The computer software product set forth in claim 14, wherein the modeled second location is approximately equal to the true second mapped location when the first and second LiDAR sensors are aligned.
